(19) Europäisches Patentamt
European Patent Office
Office européen des brevets

(11) Numéro de publication: **0 006 130**
**B1**

(12) **FASCICULE DE BREVET EUROPEEN**

(45) Date de publication du fascicule du brevet: **08.12.82**

(51) Int. Cl.[3]: **C 08 F 10/00**, C 08 F 4/64, C 08 F 297/08

(21) Numéro de dépôt: **79101474.9**

(22) Date de dépôt: **14.05.79**

(54) **Procédé pour la préparation catalytique de polymères ou copolymères d'alpha-oléfines présentant un haut indice d'isotacticité, et composition à base d'un chlorure de titane appropriée comme constituant des systèmes catalytiques utilisés dans ce procédé.**

(30) Priorité: **21.06.78 FR 7818531**

(43) Date de publication de la demande:
**09.01.80 Bulletin 80/1**

(45) Mention de la délivrance du brevet:
**08.12.82 Bulletin 82/49**

(84) Etats contractants désignés:
**DE GB NL**

(56) Documents cités:
**FR - A - 1 171 450**
**FR - A - 2 108 766**

**Le dossier contient des informations techniques présentées postérieurement au dépôt de la demande et ne figurant pas dans le présent fascicule.**

(73) Titulaire: **ATO CHIMIE**
**Tour Aquitaine Cédex no 4**
**F-92080 Paris La Defense (FR)**

(72) Inventeur: **Marie, Gilbert**
**Pavillon Auvergne Avenue Thiers**
**F-64000 Pau (FR)**

(74) Mandataire: **Boillot, Marc**
**SOCIETE NATIONALE ELF AQUITAINE**
**Département Propriété Industrielle Tour Aquitaine - Cedex No 4**
**F-92080 Paris la Défense (FR)**

**EP 0 006 130 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé pour la préparation catalytique de polymères ou copolymères d'alpha-oléfines présentant un haut indice d'isotacticité, et composition à base d'un chlorure de titane appropriée comme constituant des systèmes catalytiques utilisés dans ce procédé.

L'invention a pour objet un procédé pour la préparation catalytique de polymères ou copolymères d'alpha-oléfines présentant un haut indice d'isotacticité par polymérisation d'une alpha-oléfine en $C_3$ à $C_8$, copolymérisation séquencée de telles alpha-oléfines entre elles et/ou avec l'éthylène, ou copolymérisation de mélanges de telles alpha-oléfines entre elles et/ou avec l'éthylène, le mélange renfermant au moins 85 moles pour cent et de préférence au moins 90 moles pour cent de l'une des alpha-oléfines, au moyen d'un système catalytique du type Ziegler-Natta modifié formé par l'association d'un chlorure de titane et d'un composé organique de l'aluminium, et en présence d'un adjuvant de stéréospécificité. Elle concerne encore une composition à base d'un chlorure de titane appropriée comme constituant des systèmes catalytiques utilisés dans ce procédé.

On sait que la polymérisation d'une alpha-oléfine en $C_3$ et plus, notamment propylène, au moyen d'un système catalytique du type Ziegler-Natta formé par l'association d'un chlorure de titane, notamment trichlorure de titane, et d'un composé organique de l'aluminium, en particulier aluminium alcoyle et chlorure d'alcoylaluminium, conduit à l'obtention d'un polymérisat comportant une fraction polymère présentant une structure cristalline aux rayons X à côté d'une fraction polymère ayant une structure amorphe à l'examen aux rayons X. La fraction polymère présentant une structure cristalline est appelée polymère isotactique, tandis que la fraction polymère ayant une structure amorphe est dénommée polymère atactique.

Pour les applications industrielles des polymères ou copolymères d'alpha-oléfines en $C_3$ et plus, ce sont les polymères ou copolymères isotactiques qui présentent le plus grand intérêt, et on a cherché à augmenter la teneur en polymère isotactique du polymérisat résultant de la polymérisation ou copolymérisation de ces alpha-oléfines au détriment du polymère atactique.

Pour ce faire on a suggéré d'améliorer la stéréospécificité du système catalytique Ziegler-Natta à base d'un chlorure de titane, en particulier trichlorure de titane, et d'un composé organique de l'aluminium, notamment aluminium alcoyle et chlorure d'alcoylaluminium, en lui ajoutant des adjuvants de stéréospécificité de manière à ce que le système catalytique ainsi modifié oriente la polymérisation des alpha-oléfines en $C_3$ et plus vers la production d'un polymérisat constitué presque exclusivement de polymère isotactique.

Parmi les nombreux adjuvants proposés pour eméliorer la stéréospécificité des systèmes catalytiques formés par l'association d'un chlorure de titane et d'un composé organique de l'aluminium, on peut citer notamment des phosphines, des amines et en particulier des amines tertiaires, des éthers ou thioéthers comme les dialcoyléthers, les dialcoylthioéthers, les diarylthioéthers, ou encore, comme proposé dans le brevet français 2.108.766, des polyéthers ou polythioéthers choisis parmi les éthers dialcoyliques de polyéthylène glycol et les thioéthers dialcoyliques de polyéthylène thioglycol.

De tels adjuvants de stéréospécifité précités, s'ils sont efficaces en ce sens qu'ils améliorent la stéréospécificité du système catalytique Ziegler-Natta et permettent d'obtenir des polyoléfines à indice d'isotacticité élevé, entrainent par contre, dans un certain nombre de cas, une réduction substantielle de l'activité du système catalytique, c'est-à-dire une diminution de la quantité de polymère produite pour une quantité donnée du système catalytique utilisé. En particulier les polyéthers ou polythioéthers précités réduisent fortement l'activité du système catalytique lorsque la polymérisation est effectuée en phase solvant, et de plus, même dans une polymérisation sans solvant pour laquelle ces composés sont considérés comme efficaces, une teneur élevée du polymère en fraction isotactique n'est obtenue qu'au prix d'une diminution d'environ 12 à 30% de l'activité du système catalytique. Ceci constitue donc un inconvénient sérieux qui affecte plus au moins fortement la rentabilité du procédé de polymérisation.

L'invention propose un procédé de polymérisation du type précité dans lequel en utilisant des adjuvants de stéréospécificité particuliers on produit des polymères ou copolymères d'alpha-oléfines en $C_3$ à $C_8$ à haut indice d'isotacticité tout en conservant une activité suffisante au système catalytique quel que soit le mode opératoire choisi pour la polymérisation, et de plus, ceci constituant une forme avantageuse de l'invention, en associant lesdits adjuvants a certains composés jouant le rôle d'activateur on obtient des rendements très élevés en polymère à indice d'isotacticité élevé.

Le procédé suivant l'invention pour la préparation catalytique de polymères ou copolymères d'alpha-oléfines en $C_3$ à $C_8$ présentant un haut indice d'isotacticité par polymérisation d'une alpha-oléfine en $C_3$ à $C_8$, copolymérisation séquencée de telles alpha-oléfines entre elles ou/et avec l'éthylène ou copolymérisation de mélanges de telles alpha-oléfines entre elles ou/et avec l'éthylène, le mélange renfermant au moins 85 moles pour cent de l'une des alpha-oléfines, au moyen d'un système catalytique formé par l'association d'un chlorure de titane et d'un composé organique de l'aluminium, et en présence d'un adjuvant de stéréospécificité, est caractérisé en ce que l'adjuvant de stéréospécificité est un polyéther cyclique, du type des éthers couronnes, dont la molécule est formée de p motifs de formule $-[X-C_nH_{2n}]-$ ou/et de q motifs de formule $-[X-R]-$ disposés dans un ordre quelconque pour former un cycle de telle sorte que deux motifs adjacents quelconque du cycle soient reliés par une liaison entre l'élément X de l'un desdits motifs adjacents avec un atome de carbone de l'autre de ces motifs adjacents, n représentant un nombre entier prenant les valeurs de 1 à 6, les R,

identiques ou différents d'un motif à l'autre, désignant des radicaux divalents choisis dans le groupe formé par les radicaux divalents d'hydrocarbures aliphatiques en $C_1$ à $C_6$, les radicaux divalents d'hydrocarbures cycloaliphatiques en $C_4$ à $C_{10}$, les radicaux divalents d'hydrocarbures aromatiques en $C_6$ à $C_{20}$, et les radicaux divalents de furanne, thiophène et pyridine dont les deux valences libres sont portées chacune par un atome de carbone en position alpha par rapport à l'hétéroatome desdits hétérocycles ou par un atome de carbone d'une chaîne hydrocarbonée aliphatique en $C_1$ à $C_6$ fixée audit atome de carbone en position alpha, les symboles p et q représentant zéro ou des nombres entiers et étant tels que $0 \leqslant p \leqslant 20$ et $0 \leqslant q \leqslant 4$ avec $3 \leqslant (p+q) \leqslant 24$, les X étant identiques et désignant des atomes d'oxygène ou étant différents et représentant en partie des atomes d'oxygène et en partie des atomes de soufre ou/et des restes azotés $>N—R_1$, $R_1$ désignant un atome d'hydrogène ou un radical alcoyle en $C_1$ à $C_4$, les nombres r d'atomes d'oxygène, s d'atomes de soufre et t de restes azotés dans la molécule du polyéther cyclique étant tels que $1 \leqslant r \leqslant 28$, $0 \leqslant t \leqslant r$ et $0 \leqslant s \leqslant (r+t)$.

Les alpha-oléfines en $C_3$ à $C_8$ que l'on polymérise ou copolymérise suivant l'invention sont des alpha-oléfines de formule $CH_2=CH—R_2$, dans laquelle $R_2$ désigne un radical alcoyle en $C_1$ à $C_6$. Ces alpha-oléfines sont en particulier telles que propylène, butène-1, pentène-1, méthyl-4 pentène-1, hexène-1. Suivant l'invention on peut obtenir soit des homopolymères fortement isotactiques en polymérisant une alpha-oléfine unique, soit des copolymères séquencés fortement isotactiques en copolymérisant, suivant les divers processus de copolymérisation séquencée, l'une desdites alpha-oléfines avec l'éthylène ou au moins deux desdites alpha-oléfines avec ou sans l'éthylène, ou enfin des copolyméres statistiques fortement isotactiques en copolymérisant un mélange de l'une desdites alpha-oléfines avec l'éthylène ou un mélange d'au moins deux desdites alpha-oléfines avec ou sans l'éthylène sous réserve que dans le mélange utilisé la proportion de l'alpha-oléfine en $C_3$ à $C_8$ ou de l'une des alpha-oléfines en $C_3$ à $C_8$ soit au moins égale à 85 moles pour cent. Les polymères ou copolymères fortement isotactiques préparés suivant l'invention sont en particulier tels que polypropylène, polybutène-1, polypentène-1 poly(méthyl-4 pentène-1), copolymères statistiques de propylène et d'éthylène, de propylène et de butène-1, de propylène et de méthyl-4 pentène-1, ou encore de propylène et d'hexène-1, à plus de 85 moles pour cent de propylène, copolymères séquencés de propylène et d'éthylène, copolymères séquencés de propylène et de butène-1, copolymères séquencés de butène-1 et d'éthylène.

Le composé organique de l'aluminium constituant l'un des éléments du système catalytique utilisé suivant l'invention est avantageusement un composé répondant à la formule générale $AlY_aZ(3-a)$, dans laquelle Y désigne un reste alcoyle en $C_1$ à $C_8$, un reste cycloalcoyle en $C_4$ à $C_8$, ou un reste aryle en $C_6$ à $C_8$, Z représente un atome d'halogène, en particulier un atome de chlore, et *a* est un nombre pouvant prendre les valeurs 1, 1,5, 2 et 3. Des composés organiques préférés d'aluminium sont ceux définis par les formules $Al\ Y_2\ Cl$ et $Al\ Y_3$, dans lesquelles Y a la signification précédemment donnée, et plus particulièrement représente un radical phényle ou cyclohexyle ou encore un radical alcoyle en $C_2$ à $C_6$, notamment éthyle, propyle, isopropyle, butyle, isobutyle et hexyle. Des exemples de tels composés sont notamment chlorure d'aluminium diéthyle, chlorure d'aluminium dibutyle, triéthylaluminium, tripropylaluminium, tributylaluminium et tri isobutylaluminium.

Le chlorure de titane associé au composé organique de l'aluminium est avantageusement un trichlorure de titane, qui peut être l'un quelconque des trichlorures de titane connus dans l'art comme constituants de systèmes catalytiques Ziegler-Natta. Ce trichlorure de titane peut résulter en particulier:

—d'une réduction du tétrachlorure de titane par un métal tel que l'aluminium ou le titane, avec éventuellement broyage du produit réduit;

—d'une réduction du tétrachlorure de titane par l'hydrogène;

—d'une réduction du tétrachlorure de titane par un composé organométallique tel qu'un alcoylaluminium; ou encore

—d'un broyage d'un mélange de trichlorure de titane et d'un halogénure d'un métal du groupe III de la Classification Périodique des Eléments, en particulier d'un halogénure d'aluminium.

Conviennent également dans le cadre de l'invention les trichlorures de titane qui ont été modifiés par des traitements en présence de composés tels que des amines tertiaires, le camphre, des dialcoyléthers, des composés phosphorés comme par exemple l'oxychlorure de phosphore.

Parmi les adjuvants de stéréospécificité suivant l'invention définis précédemment on choisit en particulier ceux pour lesquels le symbole n des motifs $-[XC_nH_{2n}]-$ prend les valeurs entières de 1 à 4, les radicaux divalents R, identiques ou différents, sont choisis dans le groupe formé par les radicaux divalents d'hydrocarbures aliphatiques en $C_1$ à $C_4$, les radicaux divalents d'hydrocarbures cycloaliphatiques en $C_6$ à $C_8$, les radicaux divalents d'hydrocarbures aromatiques en $C_6$ à $C_{20}$, et les radicaux divalents de furanne, thiophène et pyridine dont les deux valences libres sont portées chacune par un atome de carbone en position alpha par rapport à l'hétéroatome desdits hétérocycles ou par un atome de carbone d'une chaîne hydrocarbonée aliphatique en $C_1$ à $C_4$ fixée audit atome de carbone en position alpha, les symboles p et q représentent zéro ou des nombres entiers de telle sorte que $0 \leqslant p \leqslant 18$ et $0 \leqslant q \leqslant 4$ avec $3 \leqslant (p+q) \leqslant 20$, les X sont identiques et désignent des atomes d'oxygène ou sont différents et représentent en partie des atomes d'oxygène et en partie des atomes de soufre et/ou des restes azotés $>N—R_1$, et les valeurs r, s et t des nombres d'atomes d'oxygène, de soufre, et

des restes azotés dans la molécule du polyéther cyclique sont telles que $1 \leqslant r \leqslant 24$, $0 \leqslant t \leqslant r$ et $0 \leqslant s \leqslant (r+t)$.

Conviennent de préférence les adjuvants de stéréospécificité du type précité dont la molécule cyclique renferme p motifs de formule $-[X-CH_2-CH_2]-$ ou/et q motifs de formule X—R, les R, identiques ou différents, étant des radicaux divalents choisis dans le groupe formé par les radicaux divalents d'hydrocarbures aliphatiques en $C_1$ à $C_4$, les radicaux divalents d'hydrocarbures cycloaliphatiques en $C_6$ à $C_8$, les radicaux divalents aromatiques de formules

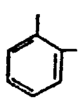 , 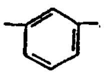 , 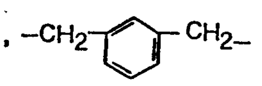 , 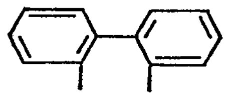 , 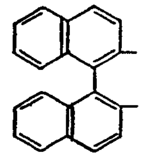 , et les radicaux divalents hétérocycliques de formules 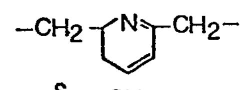 , 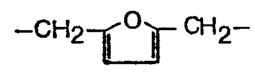 , et 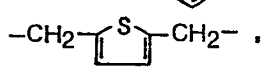 ,

les symboles p et q représentent zéro ou des nombres entiers de telle sorte que $0 \leqslant p \leqslant 18$ et $0 \leqslant q \leqslant 4$ avec $3 \leqslant (p+q) \leqslant 20$, les X étant identiques et désignant des atomes d'oxygène ou étant différents et représentant en partie des atomes d'oxygène et en partie des atomes de soufre ou/et des restes azotés $>N-R_1$, et les nombres r des atomes d'oxygène, s des atomes de soufre et t des restes azotés de la molécules du polyéther étant tels que $1 \leqslant r \leqslant 20$, $0 \leqslant t \leqslant r$ et $0 \leqslant s \leqslant (r+t)$.

Parmi ces adjuvants de stéréospécificité préférés sont particulièrement intéressants ceux qui sont définis par la formule

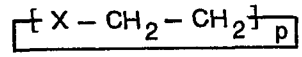

dans laquelle p est un nombre entier prenant les valeurs de 3 à 12, les X étant identiques et désignant uniquement des atomes d'oxygène ou étant différents et représentant en partie des atomes d'oxygène et en partie des atomes de soufre ou/et des restes azotés $>N-R_1$, et les nombres r des atomes d'oxygène, s des atomes de soufre et t des restes azotés de la molécule du polyéther étant tels que $1 \leqslant r \leqslant p$, $0 \leqslant t \leqslant r$ et $0 \leqslant s \leqslant (r+t)$.

A titre d'exemples de polyéthers cycliques du type des éthers couronnes utilisables comme adjuvants de stéréospécificité suivant l'invention on peut citer des composés comme le dibenzo-2,3-11,12 hexa oxa-1,4,7,10,13,16 cyclo-octadécane (éther couronne dibenzo-18 couronne-6), le benzo-2,3 hexa oxa-1,4,7,10,13,16 cyclo-octadécane, le benzo-2,3 trioxa-1,4,7 cyclononane, le benzo-2,3 tétra oxa-1,4,7,10 cyclododécane, le dibenzo-2,3-9,10 tétra oxa-1, 4, 8, 11 cyclotétradécane, le dibenzo-2,3-8,9 tétra oxa-1,4,7,10 cyclododécane, le dibenzo-2,3-12,13 tétra oxa-1,4,11,14 cycloéicosane, le benzo-2,3 penta oxa-1,4,7,10,13 cyclopentadécane, le tribenzo-2,3-8,9 14,15 hexa oxa-1,4,7,10,13,16 cyclooctadécane, le dibenzo-2,3-11,12 penta oxa-1,4,7,10,13 pentadécane, le dibenzo-2,3-11,12 penta oxa-1,4,7,10,13 aza-16 cyclooctadécane, le benzo-2,3 penta oxa-1,7,10,13,16 aza-4 cyclooctadécane, le furano-2,18 penta oxa-4,7,10,13,16 cyclooctadécane, le difurano-2,18-12,14 tétra oxa-4,7,10,16 cyclooctadécane, le difurano-2,18-9,11 tétra oxa-4,7,13,16 cyclooctadécane, le trifurano-2,18-6,8-12,14 trioxa-4,10,16 cyclooctadécane, le pyridino-2,18 penta oxa-4,7,10,13,16 cyclooctadécane, le dipyridino-2,18-9,11 tétra oxa-4,7,13,16 cyclooctadécane, le tripyridino-2,18-6,8-12,14 trioxa-4,10,16 cyclooctadécane, le benzo-1,3 penta oxa-5,8,11,14,17 cyclooctadécane, le dibenzo-1,2-13,14 N-tétraza-3,6,9,12 tétra oxa-15,18,21,24 cyclotétraéicosane, le pyridino-2,18 dibenzo-5,6-14,15 penta oxa-4,7,10,13,16 cyclooctadécane, le pyridino-2,18 trioxa-7,10,13 dithia-4,16 cyclooctadécane, le dibenzo-1,2-3,4 hexa oxa-5,8,11,14,17,20 cycloéicosane, et plus particulièrement des composés comme le tétraoxa-1,4,7,10 cyclododécane (éther couronne 12-couronne-4), l'hexaoxa-1,4,7,10,13,16 cyclooctadécane (éther couronne 18-couronne-6), le penta oxa-1,4,7,10,13 cyclooctadécane, le dioxa-1,4 thia-7 cyclononane, le trioxa-1,4,7 thia-10 cyclododécane, le dioxa-1,4 dithia-7,10 cyclododécane, le tétraoxa-1,4,7,10 thia-13 cyclopentadécane, le trioxa-1,4,7 dithia-10,13 cyclopentadécane, le dioxa-1,7 dithia-4,10 cyclododécane, le trioxa-1,4,10 dithia-7,13 cyclopentadécane, le penta oxa-1,4,7,10,13 thia-16 cyclooctadécane, le tétraoxa-1,4,7,10 dithia-13,16 cyclooctadécane, le tétra oxa-1,4,7,13 dithia-10,16 cyclooctadécane, le trioxa-1,4,7 trithia-10,13,16 cyclooctadécane, l'oxa-1 dithia-4,10 aza-7 cyclododécane, le dioxa-1,7 diaza-4,10 cyclododécane, le trioxa-1,7,10 diaza-4,13 cyclopentadécane, le tétra oxa-1,7,10,16 diaza-4,13 cyclooctadécane.

Le système catalytique peut être utilisé en l'absence de tout support ou encore être déposé sur un support de nature inorganique ou organique ou fixé à un tel support. Ainsi on peut utiliser un

système catalytique fixé sur un support inorganique, par exemple un oxyde, carbonate ou hydroxychlorure métallique, notamment oxyde de magnésium, carbonate de magnésium, et hydroxychlorure de magnésium.

La quantité d'adjuvant de stéréospécificité à utiliser est telle que le rapport du nombre d'atomes de titane au nombre de molécules d'adjuvant dans le milieu de polymérisation est compris entre 1 et 100, et de préférence entre 1 et 70.

Quant aux proportions de trichlorure de titane et de composé organique de l'aluminium, elles peuvent varier dans de larges limites suivant que le système catalytique est supporté ou non. Ainsi lorsque l'on utilise un système catalytique supporté le rapport du nombre d'atomes d'aluminium au nombre d'atomes de titane dans le milieu de polymérisation peut être choisi entre 1 et 500 et de préférence entre 50 et 200. Lorsqu'un système catalytique non supporté est utilisé, ledit rapport peut avoir une valeur allant de 1 à 10 et de préférence de 2 à 5.

Le système catalytique peut être préformé avant son introduction dans le milieu de polymérisation, mais on peut également dans certains cas former le système catalytique in situ dans le milieu de polymérisation. Qu'il soit préformé avant son introduction dans le milieu de polymérisation ou encore formé in situ dans ledit milieu, le système catalytique préformé ou les composants dudit système peuvent être ajoutés au milieu de polymérisation soit en totalité au début de la polymérisation soit par fractions ou en continu tout au long de la polymérisation.

La manière d'introduire l'adjuvant de stéréospécificité dans le milieu de polymérisation n'est pas critique et divers modes d'introduction peuvent être utilisés. Ainsi lorsqu'on préforme le système catalytique résultant de l'association d'un chlorure de titane, notamment d'un trichlorure de titane, avec le composé organique de l'aluminium avant d'injecter ledit système catalytique dans le milieu de polymérisation, on peut soit ajouter l'adjuvant de stéréospécificité au mélange du chlorure de titane choisi et du composé organique de l'aluminium, en réalisant un mélange direct des trois composants ou un prémélange de l'adjuvant avec l'un des deux autres composants et addition subséquente du composant restant, et injecter le produit résultant du mélange dans le milieu de polymérisation, soit ajouter séparément au milieu de polymérisation d'une part l'adjuvant de stéréospécificité et d'autre part, le mélange de chlorure de titane avec le composé organique de l'aluminium. Lorsque le chlorure de titane et le composé organique de l'aluminium sont introduits séparément dans le milieu de polymérisation pour former le système catalytique in situ, on peut soit ajouter séparément l'adjuvant de stéréospécificité au milieu de polymérisation soit incorporer l'adjuvant au chlorure de titane ou au composé organique de l'aluminium avant leur introduction dans le milieu de polymérisation.

Lorsqu'on effectue un prémélange de l'adjuvant avec le composé organique de l'aluminium, ledit prémélange est réalisé en mettant l'adjuvant et le composé organique de l'aluminium en solution dans un solvant inerte, notamment un hydrocarbure comme l'heptane. La solution ainsi obtenue peut être facilement injectée dans le milieu de polymérisation.

Lorsqu'on désire incorporer l'adjuvant de stéréospécificité au milieu de polymérisation sous la forme d'une composition ou prémélange renfermant l'adjuvant et le chlorure de titane choisi, notamment un trichlorure de titane, ce prémélange peut être obtenu avantageusement par des techniques telles que schématisées ci-après:

—cobroyage à sec de l'adjuvant avec un trichlorure de titane sous forme violette (trichlorure de titane obtenu par réduction du tétrachlorure de titane par un métal, et notamment par l'aluminium) en opérant dans un broyeur à boulets;

—mélange sous agitation de l'adjuvant avec un trichlorure de titane sous forme violette dans un diluant inerte, notamment dans un hydrocarbure saturé, par exemple heptane, hexane, huile minérale;

—mélange sous agitation de l'adjuvant avec un trichlorure de titane présentant la forme $\beta$ (réduction du tétrachlorure de titane au moyen d'un alcoylaluminium) dans un diluant inerte, notamment hydrocarbure saturé, puis, après évaporation du diluent, reprise du trichlorure de titane $\beta$ renfermant l'adjuvant par du tétrachlorure de titane entre 70 et 130°C pour obtenir un trichlorure de titane violet renfermant l'adjuvant;

—mélange sous agitation de l'adjuvant avec un trichlorure de titane sous forme violette dans un diluant inerte, notamment hydrocarbure saturé et par exemple hexane, heptane, à une température d'environ 40°C, puis reprise par le tétrachlorure de titane dans un diluant inerte à une température d'environ 65°C;

—formation d'une composition par mélange de l'adjuvant et de tétrachlorure de titane en proportions déterminées, puis cobroyage à sec de ladite composition avec du chlorure de magnésium anhydre (support), et traitement de la poudre broyée obtenue par un alcoylaluminium renfermant ou non un adjuvant de stéréospécificité pour produire un trichlorure de titane supporté renfermant l'adjuvant.

Les compositions d'un chlorure de titane, notamment d'un trichlorure de titane ou de tétrachlorure de titane, et d'un adjuvant suivant l'invention, obtenues notamment comme décrit plus haut, peuvent être préparées seulement au moment de l'emploi ou encore être préparées à l'avance puis stockées en suspension dans un diluant inerte, notamment hydrocarbure saturé et par exemple hexane, heptane, huile minérale. Lesdites compositions sont injectées dans le milieu de polymérisation sous la forme d'une suspension dans un diluant inerte, notamment hydrocarbure saturé du type hexane,

heptane, huile minérale.

Suivant une caractéristique avantageuse de l'invention, qui permet d'obtenir des rendements plus élevés qu'en présence de l'adjuvant seul sans diminuer l'indice d'isotacticité du polymérisat formé, le milieu de polymérisation peut renfermer un ou plusieurs activateurs choisis dans le groupe formé par les polyènes acycliques ou cycliques et les dihydrocarbylacétylènes pour lesquels les radicaux hydrocarbyles sont choisis parmi les radicaux aryles en $C_6$ à $C_{16}$, et de préférence en $C_6$ à $C_8$, et les radicaux alcoyles en $C_1$ à $C_{16}$, et de préférence en $C_1$ à $C_8$. Parmi ces composés jouant le rôle d'activateur, c'est-à-dire permettant une amélioration de la quantité de polymère produite pour une quantité donnée du système catalytique à base de chlorure de titane et de composé organique de l'aluminium, on peut citer tout particulièrement les composés tels que cyclooctadiène, cycloheptatriène-1,3,5, cyclododécatriène, cyclooctatétraéne, méthyl-3 heptatriène-1,4,6, diphénylacétylène, ditolylacétylène, méthylphénylacétylene, diméthylacétylène, diéthylacétylène, dipropylacétylène, dibutylacétylène, dihexylacétylène et dioctylacétylène.

La proportion d'activateur présent dans le milieu de polymérisation peut varier assez largement. Elle est avantageusement telle que le rapport du nombre d'atomes de titane au nombre de molécules d'activateur dans le milieu de polymérisation soit compris entre 1 et 100 et de préférence entre 1 et 70.

L'activateur peut être incorporé au milieu de polymérisation de la même manière que l'adjuvant de stéréospécificité soit indépendamment dudit adjuvant soit en mélange avec ce dernier.

Ainsi l'adjuvant et l'activateur peuvent être injectés dans le milieu de polymérisation séparément l'un de l'autre et séparément des constituants du système catalytique. On peut encore injecter l'adjuvant en mélange avec l'un des constituants du système catalytique tandis que l'activateur est introduit avec l'autre des constituants du système catalytique ou injecté seul, ou encore injecter l'activateur en mélange avec l'un des constituants du système catalytique tandis que l'adjuvant est introduit seul. On peut également introduire l'adjuvant et l'activateur ensemble en mélange avec l'un ou l'autre des constituants du système catalytique. Ainsi on peut injecter l'adjuvant et l'activateur ensemble en mélange avec le chlorure de titane. Dans ce cas la composition ou prémélange renfermant le chlorure de titane, l'adjuvant et l'activateur peut être avantageusement obtenue en utilisant des méthodes analogues à celles schématisées plus haut pour produire le prémélange du chlorure de titane et de l'adjuvant.

Dans ces compositions renfermant le chlorure de titane, l'adjuvant et l'activateur, qui peuvent être préparées ou moment de l'emploi ou encore à l'avance et qui sont conservées et utilisées en suspension dans un diluant inerte, notamment hydrocarbure saturé et par exemple heptane, hexane, huile minérale, de même que dans les compositions préformées correspondantes mentionnées plus haut et ne renfermant pas d'activateur, les proportions de composé de titane, d'adjuvant, et éventuellement d'activateur sont de préférence telles que les rapports respectifs du nombre d'atomes de titane au nombre de molécules d'adjuvant et du nombre d'atomes de titane au nombre de molécules d'activateur soient compris entre 1 et 100 et plus particulièrement entre 1 et 70.

En outre dans les compositions renfermant un chlorure de titane, un adjuvant et un activateur, les proportions relatives d'adjuvant et d'activateur sont de préférence telles que le rapport du nombre de molécules d'adjuvant au nombre de molécules d'activateur est compris entre 0,2 et 5 et plus particulièrement entre 0,5 et 2.

Les proportions relatives d'adjuvant et d'activateur dans le milieu de polymérisation peuvent également varier dans des limites assez larges. Elles sont avantageusement telles que le rapport du nombre de molécules d'adjuvant au nombre de molécules d'activateur soit compris entre 0,2 et 5, et de préférence entre 0,5 et 2.

La polymérisation, c'est-à-dire l'opération de mise en contact de l'alpha-oléfine ou des alpha-oléfines avec le système catalytique en présence de l'adjuvant et éventuellement de l'activateur pour produire le polymère ou copolymère, peut être mise en oeuvre dans les conditions utilisées habituellement dans l'art.

Ainsi on peut opérer à une température qui peut varier de 0 à 150°C, et se situe de préférence entre 40 et 120°C, et sous une pression absolue allant d'une pression légèrement supérieure à la pression atmosphérique jusqu'à une pression de l'ordre de 100 bars.

La polymérisation peut être mise en oeuvre soit dans une phase liquide inerte constituée notamment par un hydrocarbure tel que l'hexane, l'heptane ou le benzène, soit en utilisant l'alpha-oléfine ou le mélange d'alpha-oléfines à polymériser maintenu à l'état liquide comme milieu de polymérisation, ou encore en opérant en phase gazeuse. Lorsque la polymérisation est effectuée dans une phase liquide inerte, la pression de polymérisation est habituellement inférieure à environ 15 à 20 bars, par contre lorsque l'alpha-oléfine ou le mélange d'alpha-oléfines à polymériser est utilisé comme milieu de polymérisation on opère à des pressions plus élevées de manière à maintenir l'alpha-oléfine ou le mélange d'alpha-oléfines sous la forme d'une phase liquide. Ainsi lorsqu'on travaille en phase propylène liquide la pression de polymérisation est habituellement de l'ordre de 30 bars.

Les masses moléculaires des polymères peuvent être régulées en faisant appel aux agents de transfert bien connus, et en particulier à l'hydrogène.

Lorsque la polymérisation est terminée, le polymérisat est désactivé et séparé du milieu de polymérisation, et le cas échéant soumis à un traitement complémentaire de purification en faisant

appel à l'une quelconque des techniques connues. Dans le cas de la polymérisation du propylène on peut, pour la séparation et la purification du polypropylène produit, utiliser la méthode décrite dans la demande de brevet français No. 76 21292 (Publication No. 2.358.423) du 12 Juillet 1976 au nom de la demanderesse.

Les polymères et copolymères d'alpha-oléfines obtenus suivant l'invention se caractérisent par un haut indice d'isotacticité et ils sont produits avec des rendements élevés.

Par indice d'isotacticité d'un polymère on entend la valeur du rapport, en pour cents, du poids du résidu solide d'une extraction du polymère au n-heptane, en opérant en Soxhlet pendant deux heures, au poids de polymère soumis à l'extraction. L'indice d'isotacticité correspond à la proportion pondérale de la fraction isotactique dans le polymère.

L'invention est illustrée par les exemples suivants donnés à titre non limitatif.

Exemple 1 (comparative)

Dans cet exemple, constituant un exemple témoin, on polymérisait du propylène dans l'heptane au moyen d'un système catalytique à base d'un chlorure de titane, à savoir un chlorure de titane commercial de formule $TiCl_3$ $1/3AlCl_3$, et d'un composé organique d'aluminium, à savoir chlorure d'aluminium diéthyle (en abrégé DEAC), sans utiliser d'adjuvant de stéréospécificité et en opérant comme indiqué ci-après.

La polymérisation était effectuée dans un réacteur en verre de 1 litre, muni d'un agitateur rotatif et plongeant dans un bain thermostatique permettant de maintenir le contenu du réacteur à la température choisie pour la polymérisation, ledit réacteur ayant été préalablement lavé avec une solution de DEAC dans l'heptane, puis rincé à l'heptane.

En opérant sous atmosphère inerte on formait dans le réacteur un milieu réactionnel composé d'heptane séché et dégazé, de propylène, d'hydrogène, et des composés constituant le système catalytique, à savoir DEAC et $TiCl_3$ $1/3AlCl_3$ introduits séparément dans le réacteur sous la forme d'une solution (DEAC) ou d'une suspension (chlorure de titane) dans l'heptane séché sur sodium et dégazé, ces solution ou suspension étant injectées dans le réacteur à l'aide d'une seringue.

Les quantités des divers composants mis en présence pour constituer le milieu de polymérisation étaient telles que dans le réacteur on avait les valeurs suivantes:

| | | |
|---|---|---|
| Heptane | : | 500 ml |
| Pression de propylène | : | 2,2 kg/cm² |
| Pression d'hydrogène | : | 0,025 kg/cm² |
| $TiCl_3$ $1/3AlCl_3$ | : | 0,3 g |
| Rapport molaire DEAC: composé de titane: | | 2,8 |

Le milieu réactionnel ainsi formé était maintenu à 70°C sous une agitation de 625 tours/minute pendant une durée de 3,5 heures.

En fin de réaction on dégazait lentement vers les torches le propylène n'ayant pas réagi et dans le milieu dégazé on injectait une solution d'antioxydant, puis après 5 minutes on introduisait 10 cm³ d'éthanol et maintenait encore l'agitation pendant 10 minutes.

Tout le polypropylène formé au cours de la réaction de polymérisation était ensuite récupéré. Pour ce faire la suspension de polypropylène dans l'heptane contenue dans le réacteur était versée dans un cristallisoir, puis l'heptane était évaporé sous hotte à température ambiante puis sous vide à 60°C. Le résidu solide de l'évaporation renfermant les fractions isotactique et atactique du polypropylène était rassemblé et soumis à une homogénéisation dans un mélangeur pour obtenir un polypropylène aussi homogène que possible.

Sur le polypropylène ainsi homogénéisé on effectuait deux types de mesures à savoir dosage du titane permettant de déduire l'activité du catalyseur, et détermination de l'indice d'isotacticité.

Le dosage du titane contenu dans le polypropylène était réalisé, après minéralisation et calcination, par une méthode de dosage colorimétrique, la teneur en titane permettant de déduire la quantité de $TiCl_3$ exempt d'$AlCl_3$ et ensuite l'activité du catalyseur, c'est-à-dire la quantité, exprimée en grammes, de polypropylène produit par gramme de $TiCl_3$ seul.

Pour la détermination de l'indice d'isotacticité on utilisait des cartouches creuses en matière poreuse inerte vis à vis du n-heptane. On mettait tout d'abord en contact une cartouche vide avec du n-heptane à 99% de pureté en opérant en Soxhlet pendant deux heures et après séchage sous vide à 50°C de ladite cartouche traitée au n-heptane on déterminait son poids $P_1$.

On chargeait ensuite cette cartouche avec une certaine quantité de polypropylène (environ 10 g) et déterminait le poids $P_2$ de l'ensemble. On soumettait alors la cartouche chargée à une extraction au n-heptane à 99%, en opérant en Soxhlet pendant deux heures, puis on séchait sous vide à 50°C la

cartouche chargée ayant subi l'extraction et déterminait ensuite son poids $P_3$.

L'indice d'isotacticité du polypropylène, c'est-à-dire la valeur, exprimée en pour cents, du rapport du poids du résidu solide d'une extraction du polypropylène au n-heptane en opérant en Soxhlet pendant deux heures, au poids de polypropylène soumis à l'extraction, qui correspond à la proportion pondérale de la fraction polymère isotactique dans le polypropylène, est donné par la relation

$$II\,(\%) = \frac{P_3 - P_1}{P_2 - P_1} \times 100$$

On obtenait un polypropylène présentant un indice d'isotacticité (II) égal à 93—93,2 et un indice de fusion ($MI_2^{230}$) allant de 2 à 5, avec une activité du système catalytique allant de 290 à 300.

Les indices de fusion ($MI_2^{230}$) donnés dans cet exemple et dans les exemples suivants ont été déterminés suivant la norme ASTM-D 1238 en opérant à 230°C avec une charge égale à 2,160 kg.

Exemple 2

On polymérisait du propylène en suivant un mode opératoire analogue à celui décrit dans l'exemple 1 et en effectuant la polymérisation en présence d'adjuvants de stéréospécificité suivant l'invention (essais 201 à 205) ou en présence de dioxanne utilisé à titre de comparaison (essai 206).

Dans chacun des essais les constituants du système catalytique, à savoir DEAC et $TiCl_3$ $1/3AlCl_3$, étaient introduits séparément dans le réacteur et l'adjuvant de stéreospécificité ou le composé de comparaison était injecté en mélange avec le composé de titane. Pour ce faire l'adjuvant ou le composé de comparaison était agité avec le composé de titane dans un volume convenable d'heptane pendant un temps suffisant pour obtenir une suspension homogène susceptible d'être injectée à la seringue dans le réacteur.

Les conditions spécifiques à chaque essai et les résultats obtenus sont donnés dans le tableau I en même temps que les résultats de l'essai témoin (101) de l'exemple 1.

L'examen des résultats du tableau I montre que l'utilisation des adjuvants de stéréospécificité suivant l'invention entraîne une augmentation notable de l'indice d'isotacticité du polypropylène obtenu tout en conservant une activité suffisante au système catalytique (comparer les essais 201 à 205 à l'essai témoin 101). Par contre l'emploi de dioxanne comme adjuvant de stéréospécificité se traduit par une diminution sensible (environ 6 points) de l'indice d'isotacticité du polypropylène (comparer l'essai 206 à l'essai témoin 101.

TABLEAU I

| N° de l'essai | Adjuvant de stéréospécificité | | | Polypropylène | | |
|---|---|---|---|---|---|---|
| | Nature | Rapport molaire composé de Ti: adjuvant | Activité du système catalytique | Indice d'isotacticité | Indice de fusion ($MI_2$230) | densité apparente (g/l) |
| 201 | 12 C 4[a] | 15 | 272 | 95,9 | 1,8 | |
| 202 | 12 C 4 | 30 | 284 | 95,4 | 0,5 | 0,440 |
| 203 | 18 C 6[b] | 15 | 280 | 95,1 | 1,2 | |
| 204 | 18 C 6 | 30 | 295 | 94,5 | 1,4 | 0,430 |
| 205 | DDC[c] | 30 | 275 | 95,7 | | |
| 206 | Dioxanne | 30 | 290 | 89 | | |
| 101 | Néant | | 290—300 | 93—93,2 | 2—5 | |

a) Tétra oxa-1,4,7,10 cyclododécane (éther couronne 12-couronne-4)
b) Hexa oxa-1,4,7,10,13,16 cyclooctadécane (éther couronne 18-couronne-6)
c) Dioxa-1,7 dithia-4,10 cyclododécane

Exemple 3

On polymèrisait du propylène en suivant un mode opératoire analogue à celui indiqué dans l'exemple 1 et en effectuant la polymérisation en présence d'un adjuvant de stéréospécificité et d'un activateur suivant l'invention utilisés conjointement.

Les constituants du système catalytique, à savoir DEAC et $TiCl_3$ 1/3 $AlCl_3$, étaient introduits séparément dans le réacteur sous la forme d'une solution (DEAC) ou d'une suspension (composé de titane) dans l'heptane, tandis que l'adjuvant et l'activateur étaient introduits ensemble dans le réacteur en mélange avec le composé de titane en suspension dans l'heptane.

On répétait cet essai dans des conditions comparables mais en utilisant l'activateur en l'absence d'adjuvant de stéréospécificité ou l'adjuvant de stéréospécificité en l'absence d'activateur. L'adjuvant de stéréospécificité seul ou l'activateur seul était introduit dans le réacteur en mélange avec le composé de titane en suspension dans l'heptane.

Les conditions particulières à chaque essai et les résultats obtenus sont rassemblés dans le tableau II en même temps que les résultats de l'essai témoin (essai 101) de l'exemple 1.

L'utilisation conjointe d'un adjuvant de stéréospécificité et d'un activateur suivant l'invention se traduit par un effet de synergie qui conduit à l'obtention d'une activité du système catalytique plus élevée que celle à laquelle on pouvait s'attendre à partir des résultats obtenus en employant l'adjuvant seul et l'activateur seul, et ceci en conservant au polypropylène l'indice d'isotacticité élevé résultant de l'utilisation de l'adjuvant (comparer l'essai 301 aux essais 302 et 303 ainsi qu'à l'essai témoin 101).

Il apparait donc que l'association de l'adjuvant de stéréospécificité et de l'activateur suivant l'invention améliore encore, par l'obtention d'une activité plus élevée du système catalytique, les résultats déjà intéressants (polypropylène de plus haut indice d'isotacticité) résultant de l'utilisation de l'adjuvant de stéréospécificité seul.

TABLEAU II

| N° de l'essai | Adjuvant de stéréospécificité | | Activateur | | Polypropylène | |
|---|---|---|---|---|---|---|
| | Nature | Rapport molaire composé de Ti: adjuvant | Nature | Rapport molaire composé de Ti: activateur | indice d'isotacticité | activité du système catalytique |
| 301 | 18 C 6 | 30 | DPA*) | 30 | 94,4 | 320 |
| 302 | 18 C 6 | 30 | Néant | | 94,5 | 295 |
| 303 | Néant | | DPA | 30 | 93,2 | 310 |
| 101 | Néant | | Néant | | 93—93,2 | 290—300 |

*) DPA = diphénylacétylène

**Revendications**

1. Procédé pour la préparation de polymères ou copolymères d'alpha-oléfines en $C_3$ à $C_8$ présentant un haut indice d'isotacticité par polymérisation d'une alpha-oléfine en $C_3$ à $C_8$, copolymérisation séquencée de telles alpha-oléfines entre elles ou/et avec l'éthylène ou copolymérisation de mélanges de telles alpha-oléfines entre elles ou/et avec l'éthylène, lesdits mélanges renfermant au moins 85 moles pour cent de l'une des alpha-oléfines, au moyen d'un système catalytique formé par l'association d'un chlorure de titane et d'un composé organique de l'aluminium, et en présence d'un adjuvant de stéréospécificité, caractérisé en ce que ledit adjuvant est un polyéther cyclique, du type des éthers couronnes, dont la molécule est formée de p motifs de formule $-[X-C_nH_{2n}]-$ ou/et de q motifs de formule $-[X-R]-$ disposés dans un ordre quelconque pour former un cycle de telle sorte que deux motifs adjacents quelconques du cycle soient reliés par une liaison entre l'élément X de l'un desdits motifs adjacents avec un atome de carbone de l'autre de ces motifs adjacents, n représentant un nombre entier prenant les valeurs de 1 à 6, les R, identiques ou différents d'un motif à l'autre, désignant des radicaux divalents choisis dans le groupe formé par les radicaux divalents d'hydrocarbures aliphatiques en $C_1$ à $C_6$, les radicaux divalents d'hydrocarbures cyclo-aliphatiques en $C_4$ à $C_{10}$, les radicaux divalents d'hydrocarbures aromatiques en $C_6$ à $C_{20}$, et les radicaux divalents de furanne, thiophène et pyridine dont les deux valences libres sont portées chacune par un atome de carbone en position alpha par rapport à l'hétéroatome desdits hétérocycles ou par un atome de carbone d'une chaîne hydrocarbonée aliphatique en $C_1$ à $C_6$ fixée audit atome de carbone en position alpha, les symboles p et q représentant zéro ou des nombres entiers et étant tels que $0 \leqslant p \leqslant 20$ et $0 \leqslant q \leqslant 4$ avec $3 \leqslant (p+q) \leqslant 24$, les X étant identiques et désignant des atomes d'oxygène ou étant différents et représentant en partie des atomes d'oxygène et en partie des atomes de soufre ou/et des restes azotés $>N-R_1$, $R_1$ désignant un atome d'hydrogène ou un radical alcoyle en $C_1$ à $C_4$, les nombres r d'atomes d'oxygène, s d'atomes de soufre et t de restes azotés dans la molécule

du polyéther cyclique étant tels que $0 \leqslant t \leqslant r$, $0 \leqslant S \leqslant (r+t)$ et $1 \leqslant r \leqslant 28$.

2. Procédé suivant la revendication 1, caractérisé en ce que dans la molécule cyclique de l'adjuvant de stéréospécificité les motifs $-[X-C_nH_{2n}]-$ sont de la forme $-[X-CH_2-CH_2]-$, les radicaux R sont choisis dans le groupe formé par les radicaux divalents d'hydrocarbures aliphatiques en $C_1$ à $C_4$, les radicaux divalents d'hydrocarbures cycloaliphatiques en $C_6$ à $C_8$, les radicaux divalents aromatiques de formules

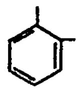 , 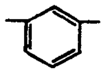 , 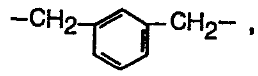 , 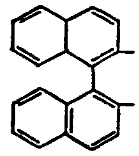 , 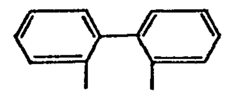 , et les radicaux divalents hétérocycliques de formules 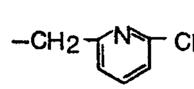 , 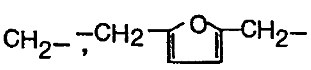 , et 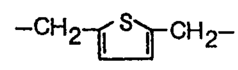

et le nombre r d'atomes d'oxygène est tel que $1 \leqslant r \leqslant 20$.

3. Procédé suivant la revendication 2, caractérisé en ce que l'adjuvant de stéréospécificité est défini par la formule

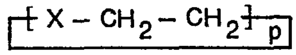

dans laquelle p est un nombre entier prenant les valeurs de 3 à 12, les X sont identiques et désignent uniquement des atomes d'oxygène ou sont différents et représentent en partie des atomes d'oxygène et en partie des atomes de soufre ou/et des restes azotés $>N-R_1$, et les nombres r des atomes d'oxygène, s des atomes de soufre et t des restes azotés de la molécule de l'adjuvant sont tels que $0 \leqslant t \leqslant r$, $0 \leqslant s \leqslant (r+t)$ et $1 \leqslant r \leqslant P$.

4. Procédé suivant l'une des revendications 1 à 3, caractérisé en ce que le composé organique de l'aluminium du système catalytique répond à la formule $AlY_aZ(3-a)$, dans laquelle Y désigne un reste alcoyle en $C_1$ à $C_8$, un reste cycloalcoyle en $C_4$ à $C_8$ ou un reste aryle en $C_6$ à $C_8$, Z représente un atome d'halogène, en particulier un atome de chlore, et *a* est un nombre pouvant prendre les valeurs 1, 1,5, 2 et 3.

5. Procédé suivant l'une des revendications 1 à 4, caractérisé en ce que le chlorure de titane est une trichlorure de titane.

6. Procédé suivant la revendication 5, caractérisé en ce que le trichlorure de titane a été modifié par traitement en présence de composés du type amines tertiaires, camphre, dialcoyléthers, composés phosphorés et notamment oxychlorure de phosphore.

7. Procédé suivant l'une des revendications 1 à 6, caractérisé en ce que le système catalytique est déposé sur un support de nature inorganique ou organique, ou fixé à un tel support.

8. Procédé suivant l'une des revendications 1 à 7, caractérisé en ce que, dans le milieu de polymérisation, le rapport du nombre d'atomes de titane au nombre de molécules d'adjuvant de stéréospécificité est compris entre 1 et 100, et de préférence entre 1 et 70.

9. Procédé suivant l'une des revendications 1 à 8, caractérisé en ce que le système catalytique résultant de l'association du chlorure de titane au composé organique de l'aluminium est préformé avant d'être injecté dans le milieu de polymérisation et l'adjuvant de stéréospécificité est introduit dans ledit milieu soit en mélange avec le système catalytique préformé ou encore séparément dudit système catalytique.

10. Procédé suivant l'une des revendications 1 à 8, caractérisé en ce que le chlorure de titane et le composé organique de l'aluminium, dont l'association forme le système catalytique, sont introduits séparément dans le milieu de polymèrisation, et l'adjuvant de stéréospécificité est introduit dans ledit milieu soit séparément desdits constituants catalytiques soit en mélange avec le chlorure de titane ou encore en mélange avec le composé organique de l'aluminium.

11. Procédé suivant l'une des revendications 1 à 10, caractérisé en ce que, outre l'adjuvant de stéréospécificité, un ou plusieurs activateurs sont présents dans le milieu de polymérisation, lesdits activateurs étant choisis parmi les polyènes acycliques ou cycliques et les dihydrocarbylacétylènes dont les radicaux hydrocarbyles sont choisis parmi les radicaux aryles en $C_6$ à $C_{16}$, et de préférence en $C_6$ à $C_8$, et les radicaux alcoyles en $C_1$ à $C_{16}$, et de préférence en $C_1$ à $C_8$.

12. Procédé suivant la revendication 11, caractérisé en ce que dans le milieu de polymérisation le rapport du nombre d'atomes de titane au nombre de molécules d'activateur est compris entre 1 et 100, et de préférence entre 1 et 70.

13. Procédé suivant la revendication 11 ou 12, caractérisé en ce que les proportions relatives d'adjuvant de stéréospécificité et d'activateur sont telles que le rapport du nombre de molécules

d'adjuvant au nombre de molécules d'activateur est compris entre 0,2 et 5, et de préférence entre 0,5 et 2.

14. Procédé suivant l'une des revendications 1 à 13, caractérisé en ce que l'activateur est introduit dans le milieu de polymérisation soit indépendamment de l'adjuvant de stéréospécificité soit en mélange avec ce dernier.

15. Composition à base d'un chlorure de titane appropriée comme constituant des systèmes catalytiques utilisés dans le procédé suivant la revendication 1, caractérisée en ce qu'elle renferme un chlorure de titane choisi parmi le tétrachlorure de titane et les trichlorures de titane et un adjuvant consistant en un polyéther cyclique, du type des éthers couronnes, dont la molécule est formée de P motifs de formule $-[X-C_nH_{2n}]-$ ou/et de q motifs de formule $-[X-R]-$ disposés dans un ordre quelconque pour former un cycle de telle sorte que deux motifs adjacents quelconques du cycle soient reliés par une liaison entre l'élément X de l'un desdits motifs adjacents avec un atome de carbone de l'autre de ces motifs adjacents, n représentant un nombre entier prenant les valeurs de 1 à 6, les R, identiques ou différents d'un motif à l'autre, désignant des radicaux divalents choisis dans le groupe formé par les radicaux divalents d'hydrocarbures aliphatiques en $C_1$ à $C_6$, les radicaux divalents d'hydrocarbures cycloaliphatiques en $C_4$ à $C_{10}$, les radicaux divalents d'hydrocarbures aromatiques en $C_6$ à $C_{20}$, et les radicaux divalents de furanne, thiophène et pyridine dont les deux valences libres sont portées chacune par un atome de carbone en position alpha par rapport à l'hétéroatome desdits hétérocycles ou par un atome de carbone d'une chaîne hydrocarbonée aliphatique en $C_1$ à $C_6$ fixée audit atome de carbone en position alpha, les symboles p et q représentant zéro ou des nombres entiers et étant tels que $0 \leqslant p \leqslant 20$ et $0 \leqslant q \leqslant 4$ avec $3 \leqslant (p+q) \leqslant 24$, les X étant identiques et désignant des atomes d'oxygène ou étant différents et représentant en partie des atomes d'oxygène et en partie des atomes de soufre ou/et des restes azotés $>N-R_1$, $R_1$ désignant un atome d'hydrogène ou un radical alcoyle en $C_1$ à $C_4$, les nombres r d'atomes d'oxygène, s d'atomes de soufre et t de restes azotés dans la molécule du polyéther cyclique étant tels que $0 \leqslant t \leqslant r$, $0 \leqslant s \leqslant (r+t)$ et $1 \leqslant r \leqslant 28$.

16. Composition suivant la revendication 15, caractérisée en ce que dans la molécule cyclique de l'adjuvant de stéréospécificité les motifs $-[X-C_nH_{2n}]-$ sont de la forme $-[X-CH_2-CH_2]-$, les radicaux R sont choisis dans le groupe formé par les radicaux divalents d'hydrocarbures aliphatiques en $C_1$ à $C_4$, les radicaux divalents d'hydrocarbures cycloaliphatiques en $C_6$ à $C_8$, les radicaux divalents aromatiques de formules

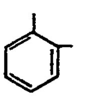 , 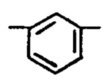 , 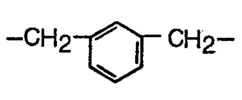 , 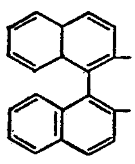 , 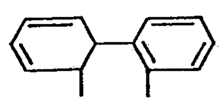 , et les radicaux divalents hétérocycliques de formules 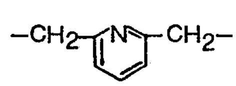 , 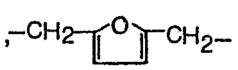 , et 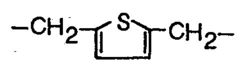

et le nombre r d'atomes d'oxygène est tel que $1 \leqslant r \leqslant 20$.

17. Composition suivant la revendication 15, caractérisé en ce que l'adjuvant de stéréospécificité est défini par la formule

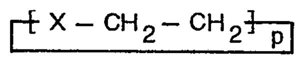

dans laquelle p est un nombre entier prenant les valeurs de 3 à 12, les X sont identiques et désignent uniquement des atomes d'oxygène ou sont différents et représentent en partie des atomes d'oxygène et en partie des atomes de soufre ou/et des restes azotés $>N-R_1$, et les nombres r des atomes d'oxygène, s des atomes de soufre et t des restes azotés de la molécule de l'adjuvant sont tels que $0 \leqslant t \leqslant r$, $0 \leqslant s \leqslant (r+t)$ et $1 \leqslant r \leqslant p$.

18. Composition suivant l'une des revendications 15 à 17, caractérisée en ce que le rapport du nombre d'atomes de titane au nombre de molécules d'adjuvant est compris entre 1 et 100, et de préférence entre 1 et 70.

19. Composition suivant l'une des revendications 15 à 18, caractérisée en ce que, outre l'adjuvant, elle renferme un ou plusieurs activateurs choisis dans le groupe formé par les polyènes acycliques ou cycliques et les dihydrocarbylacétylènes dont les radicaux hydrocarbyles sont choisis parmi les radicaux aryles en $C_6$ à $C_{16}$, et de préférence en $C_6$ à $C_8$ et les radicaux alcoyles en $C_1$ à $C_{16}$, et de préférence en $C_1$ à $C_8$, le rapport du nombre d'atomes de titane au nombre de molécules d'activateur étant compris entre 1 et 100, et de préférence entre 1 et 70.

20. Composition suivant la revendication 19 ou 20, caractérisée en ce que les proportions relatives d'adjuvant et d'activateur sont telles que le rapport du nombre de molécules d'adjuvant au

nombre de molécules d'activateur est compris entre 0,2 et 5, et de préférence entre 0,5 et 2.

21. Composition suivant l'une des revendications 15 à 20, caractérisée en ce qu'elle est en suspension dans un diluant inerte, et notamment dans un hydrocarbure saturé.

22. Composition suivant l'une des revendications 15 à 20, caractérisée en ce qu'elle est déposée sur un support de nature inorganique ou organique ou fixée à un tel support.

**Claims**

1. A process for making polymers or copolymers of alpha-olefins containing 3 to 8 carbon atoms with a high isotacticity index, by polymerization of an alpha-olefin containing 3 to 8 carbon atoms, sequence copolymerization of such alpha-olefins with one another and/or with ethylene, or copolymerization of mixtures of such alpha-olefins with one another and/or with ethylene, such mixtures containing at least 85 moles per cent of one such alpha-olefin, using a catalytic system consisting of a titanium chloride together with an organic aluminium compound, in the presence of a stereospecificity additive, this process being characterized by the fact that the said stereospecificity additive is a cyclic polyether, of the crown ether type, in which the molecule is made up of p groups with the formula $-[X-C_nH_{2n}]-$ and/or q groups with the formula $-[X-R]-$, arranged in any order to form a cycle in which any two adjacent groups in the cycle are connected by a bond between the element X in one of these adjacent groups and a carbon atom in the other group, where n is an integer from 1 to 6, R, which may be the same or different from one group to the other, represents divalent radicals selected from the group consisting of divalent radicals of aliphatic hydrocarbons containing 1 to 6 carbon atoms, divalent radicals of cycloaliphatic hydrocarbons containing 4 to 10 carbon atoms, divalent radicals of aromatic hydrocarbons containing 6 to 20 carbon atoms, and the divalent radicals of furane, thiophene and pyridine, in which both free valences are each borne by a carbon atom in the alpha position in relation to the heteroatom of these heterocycles, or by a carbon atom of an aliphatic hydrocarbon chain containing 1 to 6 carbon atoms fixed to the said carbon atom in the alpha position, p and q represent nought or integers such that $0 \leqslant p \leqslant 20$, $0 \leqslant q \leqslant 4$ and $3 \leqslant (p+q) \leqslant 24$, and X is either identical and represents oxygen atoms, or different and represents partly oxygen atoms and partly sulphur atoms and/or nitrogen-containing radicals with the formula: $>N-R_1$, where $R_1$ is a hydrogen atom or alkyl radical containing 1 to 4 carbon atoms, and the number of oxygen atoms r, sulphur atoms s and nitrogen-containing radicals t is the cyclic polyether molecule are such that $0 \leqslant t \leqslant r$, $0 \leqslant s \leqslant (r+t)$ and $1 \leqslant r \leqslant 28$.

2. A process according to claim 1, in which the groups with the formula $-[X-C_nH_{2n}]-$ in the cyclic molecule of the stereospecificity additive have the formula $-[X-CH_2-CH_2]-$, the R radicals are selected from the group consisting of divalent radicals of aliphatic hydrocarbons containing 1 to 4 carbon atoms, divalent radicals of cyclo-aliphatic hydrocarbons containing 6 to 8 carbon atoms, aromatic divalent radicals of the formulae:

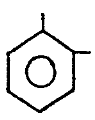 , 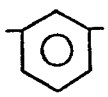 , 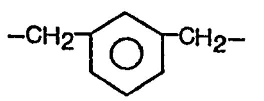 , 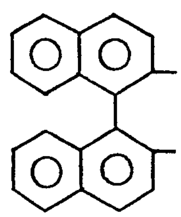 , 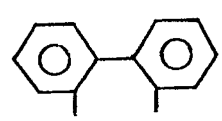 ,

and heterocyclic divalent radicals of the formulae 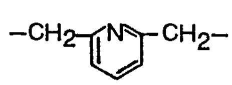 , 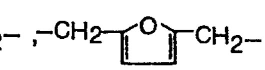 ,

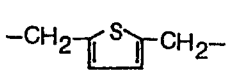

and the number of oxygen atoms r is such that $1 \leqslant r \leqslant 20$.

3. A process according to claim 2, in which the stereospecificity additive has the formula:

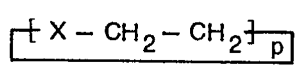

where:

p is an integer from 3 to 12,

X is either identical and represents oxygen atoms, or different and represents partly oxygen atoms and partly sulphur atoms and/or nitrogen-containing radicals with the formula $>N-R_1$ and the number of

oxygen atoms r, sulphur atoms s and nitrogen-containing radicals t in the additive molecule are such that $0 \leqslant t \leqslant r$, $0 \leqslant s \leqslant (r+t)$ and $1 \leqslant r \leqslant p$.

4. A process according to any of claims 1 to 3, in which the organic aluminium compound in the catalytic system has the formula:

$$AlY_aZ(3\text{-}a)$$

where:
Y is an alkyl radical containing 1 to 8 carbon atoms, a cyclo-alkyl radical containing 4 to 8 carbon atoms, or an aryl radical containing 6 to 8 carbon atoms,
Z is a halogen atom, in particular a chlorine atom, and
a is a number equal to 1, 1.5, 2 or 3.

5. A process according to any of claims 1 to 4, in which the titanium chloride is a titanium trichloride.

6. A process according to claim 5, in which the titanium trichloride is modified by being treated in the presence of compounds such as tertiary amines, camphor, dialkyl ethers, and phosphorus compound such as phosphorus oxychloride.

7. A process according to any of claims 1 to 6, in which the catalytic system is deposited on or fixed to an inorganic or organic substrate.

8. A process according to any of claims 1 to 7, in which the ratio of the number of titanium atoms to the number of stereospecificity additive molecules, in the polymerization mixture, is between 1 and 100, and preferably between 1 and 70.

9. A process according to any of claims 1 to 8, in which the catalytic system consisting of titanium chloride and organic aluminium compound is preformed before being injected into the polymerization mixture, and the stereospecificity additive is injected into this mixture either mixed with the preformed catalytic system or separately from the said catalytic system.

10. A process according to any of claims 1 to 8, in which the titanium chloride and organic aluminium compound together forming the catalytic system are injected separately into the polymerization mixture, and the stereospecificity additive is injected into this mixture either separately from the catalytic system components or in admixture which either the titanium chloride or the organic aluminium compound.

11. A process according to any of claims 1 to 10, in which, in addition to the stereospecificity additive, the polymerization mixture contains one or more activators, selected from the group consisting of acyclic or cyclic polyenes and dihydrocarbylacetylenes in which the hydrocarbyl radicals are selected from aryl radicals containing 6 to 16 and preferably 6 to 8 carbon atoms, and alkyl radicals containing 1 to 16 and preferably 1 to 8 carbon atoms.

12. A process according to claim 11, in which the ratio of the number of titanium atoms to the number of molecules of activator in the polymerization mixture is between 1 and 100, and preferably between 1 and 70.

13. A process according to claim 11 or 12, in which the relative proportions of stereospecificity additive and activator are such that the ratio of the number of additive molecules to the number of activator molecules is between 0,2 and 5, and preferably between 0,5 and 2.

14. A process according to any of claims 1 to 13, in which the activator is added to the polymerization mixture either separately from or mixed with the stereospecificity additive.

15. A composition containing titanium chloride, suitable as component of the catalytic systems used in the process according to claim 1, characterized by the fact that it contains a titanium chloride selected from titanium tetrachloride and titanium trichlorides, and also an additive consisting of a cyclic polyether, of the crown ether type, in which the molecule is made up of p groups with the formula $-\!\!\!+\!X\!-\!C_nH_{2n}\!+\!\!\!-$ and/or q groups with the formula $-\!\!\!+\!X\!-\!R\!+\!\!\!-$, arranged in any order to form a cycle in which any two adjacent groups in the cycle are connected by a bond between the element X in one of these adjacent groups and a carbon atom in the other group, where n is an integer from 1 to 6, R, which may be the same or different from one group to the other, represents divalent radicals selected from the group consisting of divalent radicals of aliphatic hydrocarbons containing 1 to 6 carbon atoms, divalent radicals of cycloaliphatic hydrocarbons containing 4 to 10 carbon atoms, divalent radicals of aromatic hydrocarbons containing 6 to 20 carbon atoms, and the divalent radicals of furane, thiophene and pyridine, in which both free valences are each borne by a carbon atom in the alpha position in relation to the heteroatom of these heterocycles, or by a carbon atom of an aliphatic hydrocarbon chain containing 1 to 6 carbon atoms fixed to the said carbon atom in the alpha position, p and q represent nought or integers such that $0 \leqslant p \leqslant 20$, $0 \leqslant q \leqslant 4$ and $3 \leqslant (p+q) \leqslant 24$, and X is either identical and represents oxygen atoms, or different and represents partly oxygen atoms and partly sulphur atoms and/or nitrogen-containing radicals with the formula: $>N\!-\!R_1$, where $R_1$ is a hydrogen atom or alkyl radical containing 1 to 4 carbon atoms, and the number of oxygen atoms r, suphur atoms s and nitrogen-containing radicals t is the cyclic polyether molecule are such that $0 \leqslant t \leqslant r$, $0 \leqslant s \leqslant (r+t)$ and $1 \leqslant r \leqslant 28$.

16. A composition according to claim 15, in which the groups with the formula $-\!\!\!+\!X\!-\!C_nH_{2n}\!+\!\!\!-$,

in the cyclic molecule of the stereospecificity additive have the formula $-[X-CH_2-CH_2]-$, the R radicals are selected from the group consisting of divalent radicals of aliphatic hydrocarbons containing 1 to 4 carbon atoms, divalent radicals of cyclo-aliphatic hydrocarbons containing 6 to 8 carbon atoms, aromatic divalent radicals of the formulae:

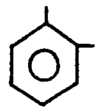 , 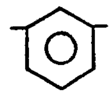 , 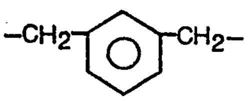 , 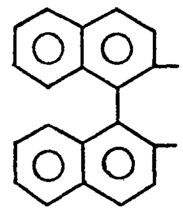 , 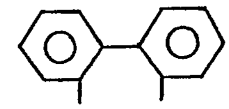 ,

and heterocyclic divalent radicals of the formulae 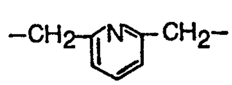 , 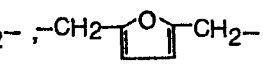 ,

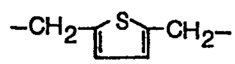

and the number of oxygen atoms r is such that $1 \leqslant r \leqslant 20$.

17. A composition according to claim 15, in which the stereospecificity additive has the formula:

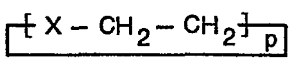

where:
p is an integer from 3 to 12,
X is either identical and represents oxygen atoms, or different and represents partly oxygen atoms and partly sulphur atoms and/or nitrogen-containing radicals with the formula $>N-R_1$,
and the number of oxygen atoms, r, sulphur atoms s and nitrogen-containing radicals t in the additive molecule are such that $0 \leqslant t \leqslant r$, $0 \leqslant s \leqslant (r+t)$ and $1 \leqslant r \leqslant p$.

18. A composition according to any of claims 15 to 17, in which the ratio of the number of titanium atoms to the number of additive molecules is between 1 and 100, and preferably between 1 and 70.

19. A composition according to any of claims 15 to 18, characterised by the fact that, in addition to the additive, it contains one or more activators, selected from the group consisting of acyclic or cyclic polyenes and dihydrocarbylacetylenes in which the hydrocarbyl radicals are selected from aryl radicals containing 6 to 16 and preferably 6 to 8 carbon atoms, and alkyl radicals containing 1 to 16 and preferably 1 to 8 carbon atoms, the ratio of the number of titanium atoms to the number of activator molecules being between 1 and 100, and preferably between 1 and 70.

20. A composition according to claim 19, in which the relative proportions of additive and activator are such that the ratio of the number of additive molecules to the number of activator molecules is between 0,2 and 5, and preferably between 0,5 and 2.

21. A composition according to any of claims 15 to 20, characterized by the fact that it is in suspension in an inert diluent, such as a saturated hydrocarbon.

22. A composition according to any of claims 15 to 20, characterized by the fact that it is deposited on or fixed to an inorganic or organic substrate.

**Patentansprüche**

1. Verfahren zur Herstellung von Polymeren oder Copolymeren von Alpha-Olefinen mit 3 bis 8 Kohlenstoffatom mit einem hohen Isotaktizitätsindex durch Polymerisation eines Alpha-Olefins mit 3 bis 8 Kohlenstoffatomen, Copolymerisationsfolge derartiger Olefine untereinander oder/und mit Äthylen oder Copolymerisation von Gemischen derartiger Alpha-Olefine untereinander oder/und mit Äthylen, wobei die Gemische mindestens 85 Mol% eines dieser Alpha-Olefine enthalten, mittels eines katalytischen Systems, welches durch Vereinigung eines Titanchlorids und einer organischen Aluminiumverbindung gebildet wurde, und in Gegenwart eines Stereospezifitätssteuerungsmittels, dadurch gekennzeinet, daß das Steuerungsmittel aus einem cyclischen Polyäther vom Typ der ringförmigen Äther besteht, dessen Molekül durch p Einheiten der Formel $-[X-C_nH_{2n}]-$ oder/und aus q Einheiten der Formel $-[X-R]-$ gebildet ist, die in beliebiger Ordnung zur Bildung eines derartigen Kreises angeordnet sind, daß zwei benachbarte beliebige Einheiten des Ringes durch eine Bindung zwischen dem Element X des einen dieser benachbarten Einheiten mit einem Kohlenstoffatom des anderen der benachbarten Einheiten verbunden sind, n eine ganze Zahl mit den Werten 1 bis 6, die von einer Einheit und einer anderen Einheit identischen oder unterschiedlichen Reste R zweiwertige Reste

aus der Gruppe von zweiwertigen aliphatischen Kohlenwasserstoffresten mit 1 bis 6 Kohlenstoffatomen, zweiwertigen cycloaliphatischen Kohlenwassterstoffresten mit 4 bis 10 Kohlenstoffatomen, zweiwertigen aromatischen Kohlenwasserstoffresten mit 6 bis 20 Kohlenstoffatomen und zweiwertigen Resten von Furan, Thiophen und Pyridin, von denen die beiden freien Valenzen jeweils von einem Kohlenstoffatom in $\alpha$-Stellung bezüglich des Heteroatoms dieser Heterocyclen oder von einem Kohlenstoffatom einer an dem Kohlenstoffatom in der $\alpha$-Stellung gebundener aliphatischer Kohlenwasserstoffkette mit 1 bis 6 Kohlenstoffatomen getragen werden, und die Symbole p und q die Zahl null oder ganze Zahlen in der Weise, daß $0 \leqslant p \leqslant 20$ und $0 \leqslant q \leqslant 4$, wobei $3 \leqslant (p+q) \leqslant 24$, bedeuten und die Gruppen X identisch sind und Sauerstoffatome bedeuten oder unterschiedlich sind und zum Teil Sauerstoffatome und zum Teil Schwefelatome oder/und stickstoffhaltige Reste $>N-R_1$ bedeuten, worin $R_1$ ein Wasserstoffatom oder ein Alkylrest mit 1 bis 4 Kohlenstoffatomen bedeutet, wobei die Zahlen r der Sauerstoffatome, s der Schwefelatome und t der stickstoffhaltigen Reste in dem Molekül des cyclischen Polyäthers so sind, daß $0 \leqslant t \leqslant r$, $0 \leqslant s \leqslant (r+t)$ und $1 \leqslant r \leqslant 28$.

2. Verfahren nach Anspruch 1, dadurch gekennzeichnet, daß in dem cyclischen Molekül des Stereospezifitätssteuerungsmittels die Einheiten $-[X-C_nH_{2n}]-$ in der Form $-[X-CH_2-CH_2]-$ vorliegen, wobei die Reste R aus der Gruppe von zweiwertigen aliphatischen Kohlenwasserstoffresten mit 1 bis 4 Kohlenstoffatomen, zweiwertigen cycloaliphatischen Kohlenwasserstoffresten mit 6 bis 8 Kohlenstoffatomen, zweiwertigen aromatischen Resten der Formeln

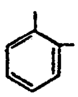 , 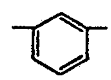 , 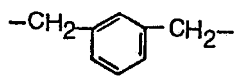 , 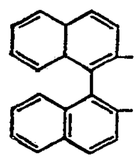 , 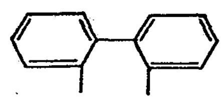 und zweiwertigen

heterocyclischen Resten der Formeln 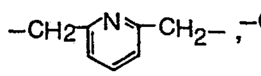 , 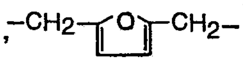 , 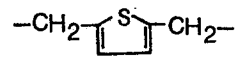

gewählt sind und die Zahl r der Sauerstoffatome so ist, daß $1 \leqslant r \leqslant 20$.

3. Verfahren nach Anspruch 2, dadurch gekennzeichnet, daß das Stereospezifitätssteuerungsmittel die Formel

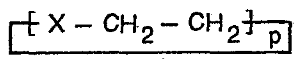

besitzt, worin p eine ganze Zahl mit den Werten von 3 bis 12 ist, die Reste X identisch sind und ausschließlich Sauerstoffatome bedeuten oder unterschiedlich sind und teilweise Sauerstoffatome und teilweise Schwefelatome oder/und stickstoffhaltige Reste $>N-R_1$ bedeuten und die Zahl r der Sauerstoffatome, s der Schwefelatome und t der stickstoffhaltigen Reste des Moleküls des Steuerungsmittels so sind, daß $0 \leqslant t \leqslant r$, $0 \leqslant s \leqslant (r+t)$ und $1 \leqslant r \leqslant p$.

4. Verfahren nach Anspruch 1 bis 3, dadurch gekennzeichnet, daß die organische Aluminiumverbindung des katalytischen Systems der Formel $AlY_aZ_{(3-a)}$ entspricht, worin Y einen Alkylrest mit 1 bis 8 Kohlenstoffatomen, einen Cycloalkylrest mit 4 bis 8 Kohlenstoffatomen oder einen Arylrest mit 6 bis 8 Kohlenstoffatomen, Z ein Halogenatom, insbesondere ein Chloratom, und a eine Zahl, die die Werte 1, 1,5, 2 und 3 annehmen kann, bedeuten.

5. Verfahren nach Anspruch 1 bis 4, dadurch gekennzeichnet, daß das Titanchlorid aus einem Titantrichlorid besteht.

6. Verfahren nach Anspruch 5, dadurch gekennzeichnet, daß das Titantrichlorid durch Behandlung in Gegenwart von Verbindungen wie tertiären Aminen, Campher, Dialkyläthern, phosphorhaltigen Verbindungen und insbesondere Phosphoroxychlorid modifiziert wurde.

7. Verfahren nach Anspruch 1 bis 6, dadurch gekennzeichnet, daß das katalytische System auf einem anorganischen oder organischen Träger abgeschieden ist oder auf einem derartigen Träger fixiert ist.

8. Verfahren nach Anspruch 1 bis 7, dadurch gekennzeichnet, daß im Polymerisationsmedium das Verhältnis der Anzahl der Titanatome zu der Anzahl der Moleküle des Stereospezifitätssteuerungsmittels zwischen 1 und 100 vorzugsweise zwischen 1 und 70 liegt.

9. Verfahren nach Anspruch 1 bis 8, dadurch gekennzeichnet, daß das katalytische System, welches sich durch Verbindung des Titanchlorids mit der organischen Aluminiumverbindung ergibt, vor der Eindüsung in das Polymerisationsmedium vorgeformt wird und das Stereospezifitätssteuerungsmittel in das Medium entweder im Gemisch mit dem vorgeformten katalytischen System oder noch getrennt von diesem katalytischen System eingeführt wird.

10. Verfahren nach Anspruch 1 bis 8, dadurch gekennzeichnet, daß das Titanchlorid und die organische Aluminiumverbindung, deren Vereinigung das katalytische System bildet, getrennt in das Polymerisationsmedium eingeführt werden und das Stereospezifitätssteuerungsmittel in das Medium

entweder getrennt von diesen katalytischen Bestandteilen oder im Gemisch mit dem Titanchlorid oder auch im Gemisch mit der organischen Aluminiumverbindung eingeführt wird.

11. Verfahren nach Anspruch 1 bis 10, dadurch gekennzeichnet, daß außer dem Stereospezifitätssteuerungsmittel ein oder mehrere Aktivatoren in dem Polymerisationsmedium vorliegen, wobei diese Aktivatoren unter acyclischen oder cyclischen Polyenen und Dihydrocarbylacetylenen gewählt sind, deren Kohlenwasserstoffreste aus Arylresten mit 6 bis 16 Kohlenstoffatomen und vorzugsweise 6 bis 8 Kohlenstoffatomen und Alkylresten mit 1 bis 16 und vorzugsweise 1 bis 8 Kohlenstoffatomen bestehen.

12. Verfahren nach Anspruch 11, dadurch gekennzeichnet, daß im Polymerisationsmedium das Verhältnis der Anzahl der Titanatome zur Anzahl der Aktivatormoleküle zwischen 1 und 100 und vorzugsweise 1 und 70 liegt.

13. Verfahren nach Anspruch 11 oder 12, dadurch gekennzeichnet, daß die relativen Verhältnisse des Stereospezifitätssteuerungsmittels und des Aktivators so sind, daß das Verhältnis der Anzahl der Steuerungsmittelmoleküle zur Anzahl der Aktivatormoleküle zwischen 0,2 und 5 und vorzugsweise zwischen 0,5 und 2 liegt.

14. Verfahren nach Anspruch 1 bis 13, dadurch gekennzeichnet, daß der Aktivator in das Polymerisationsmedium entweder unabhängig von dem Stereospezifitätssteuerungsmittel oder im Gemisch mit diesem eingeführt wird.

15. Masse auf der Basis eines Titanchlorids, die als Bestandteil der im Verfahren gemäß Anspruch 1 eingesetzten katalytischen System geeignet ist, dadurch gekennzeichnet, daß sie ein unter Titantetrachlorid und Titantrichloriden gewähltes Titanchlorid und ein aus einem cyclischen Polyäther der Art der ringförmigen Äther bestehendes Steuerungsmittel enthält, dessen Molekül aus p Einheiten der Formel $-\!\![X—C_nH_{2n}]\!\!-$ oder/und q Einheiten der Formel $-\!\![X—R]\!\!-$ gebildet ist, die in beliebiger Anordnung zur Bildung eines Ringes in der Art angeordnet sind, daß zwei beliebige benachbarte Einheiten des Ringes durch eine Bindung zwischen dem Element X des einen dieser benachbarten Einheiten mit einem Kohlenstoffatom des anderen der benachbarten Einheiten verbunden sind, n eine ganze Zahl mit den Werten 1 bis 6, die von einer Einheit zur anderen identischen oder unterschiedlichen Reste R zweiwertige Reste aus der Gruppe von zweiwertigen aliphatischen Kohlenwasserstoffresten mit 1 bis 6 Kohlenstoffatomen, zweiwertigen cycloaliphatischen Kohlenwasserstoffresten mit 4 bis 10 Kohlenstoffatomen, zweiwertigen aromatischen Kohlenwasserstoffresten mit 6 bis 20 Kohlenstoffatomen und zweiwertigen Resten von Furan, Thiophen und Pyridin, wovon die beiden freien Wertigkeiten jeweils von einem Kohlenstoffatom in $\alpha$-Stellung bezüglich des Heteroatoms der Heterocyclen oder von einem Kohlenstoffatom einer an dem Kohlenstoffatom in der $\alpha$-Stellung gebundenen aliphatischen Kohlenwasserstoffkette mit 1 bis 6 Kohlenstoffatomen getragen werden, die Symbole p und q die Zahl null oder ganze Zahlen in der Weise bedeuten, daß $0 \leqslant p \leqslant 20$ und $0 \leqslant q \leqslant 4$, wobei $3 \leqslant (p+q) \leqslant 24$, und die Reste X entweder identisch sind und Sauerstoffatome bedeuten oder unterschiedlich sind und teilweise Sauerstoffatome und teilweise Schwefelatome oder/und stickstoffhaltige Reste $>N—R_1$ bedeuten, wobei $R_1$ ein Wasserstoffatom oder einen Alkylrest mit 1 bis 4 Kohlenstoffatomen angibt, und die Zahlen r der Sauerstoffatome, s der Schwefelatome und t der stickstoffhaltigen Reste im Molekül des cyclischen Polyäthers so sind, daß $0 \leqslant t \leqslant r$, $0 \leqslant s \leqslant (r+t)$ und $1 \leqslant r \leqslant 28$.

16. Masse nach Anspruch 15, dadurch gekennzeichnet, daß im cyclischen Molekül des Stereospezifitätssteuerungsmittels die Einheiten $-\!\![X—C_nH_{2n}]\!\!-$ in der form $-\!\![X—CH_2CH_2]\!\!-$ vorliegen, wobei die Reste R aus der Gruppe von zweiwertigen aliphatischen Kohlenwasserstoffresten mit 1 bis 4 Kohlenstoffatomen, zweiwertigen cycloaliphatischen Kohlenwasserstoffresten mit 6 bis 8 Kohlenstoffatomen, zweiwertigen aromatischen Resten der Formeln

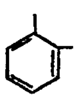, 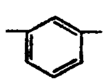, 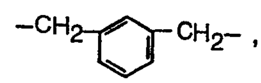, 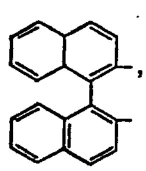, 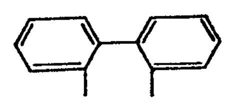 und zweiwertigen

heterocyclischen Resten der Formeln 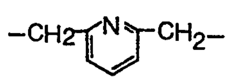, 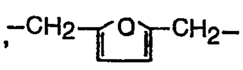, 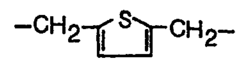

gewält sind und die Anzahl r der Sauerstoffatome so ist, daß $1 \leqslant r \leqslant 20$.

17. Masse nach Anspruch 15, dadurch gekennzeichnet, daß das Stereospezifitätssteuerungsmittel die folgende Formel besitzt

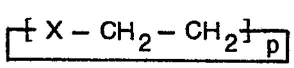

worin p eine ganze Zahl mit den Werten von 3 bis 12 ist, die Reste X entweder identisch sind und ausschließlich Sauerstoffatome bedeuten oder unterschiedlich sind und teilweise Sauerstoffatome und

teilweise Schwefelatome oder/und stickstoffhaltige Reste $>N—R_1$ bedeuten, wobei die Zahl r der Sauerstoffatome, s der Schwefelatome und t der stickstoffhaltigen Reste des Moleküls des Steuerungsmittels, so sind, daß $0 \leqslant t \leqslant r$, $0 \leqslant s \leqslant (r+t)$ und $1 \leqslant r \leqslant p$.

18. Masse nach Anspruch 15 bis 17, dadurch gekennzeichnet, daß das Verhältnis der Anzahl der Titanatome zur Anzahl der Steuerungsmittelmoleküle zwischen 1 und 100 und vorzugsweise 1 und 70 liegt.

19. Masse nach Anspruch 15 bis 18, dadurch gekennzeichnet, daß sie außer dem Steuerungsmittel einen oder mehrere Aktivatoren aus der Gruppe von acyclischen oder cyclischen Polyenen und Dihydrocarbylacetylenen enthält, deren Kohlenwasserstoffreste aus Arylresten mit 6 bis 16 Kohlenstoffatomen und vorzugsweise 6 bis 8 Kohlenstoffatomen und Alkylresten mit 1 bis 16 Kohlenstoffatomen und vorzugsweise 1 bis 8 Kohlenstoffatomen bestehen, wobei das Verhältnis der Anzahl der Titanatome zur Anzahl der Aktivatormoleküle zwischen 1 und 100 und vorzugsweise 1 und 70 liegt.

20. Masse nach Anspruch 19 oder 20, dadurch gekennzeichnet, daß die relativen Verhältnisse von Steuerungsmittel und Aktivatoren so sind, daß das Verhältnis der Anzahl der Moleküle des Steuerungsmittels zur Anzahl der Moleküle des Aktivators zwischen 0,2 und 5 und vorzugsweise zwischen 0,5 und 2 liegt.

21. Masse nach Anspruch 15 bis 20, dadurch gekennzeichnet, daß sie als Suspension in einem inerten Verdünnungsmittel, insbesondere einem gesättigten Kohlenwasserstoff, vorliegt.

22. Masse nach Anspruch 15 bis 20, dadurch gekennzeichnet, daß sie auf einem anorganischen oder organischen Träger abgeschieden ist oder auf einem derartigen Träger fixiert ist.